# EUROPÄISCHE PATENTSCHRIFT

(11) **EP 3 662 155 B1**
(45) Veröffentlichungstag und Bekanntmachung des Hinweises auf die Patenterteilung: **23.02.2022**
(21) Anmeldenummer: 18748910.9
(22) Anmeldetag: 31.07.2018
(51) Int. Cl.: F02M 51/06, F02M 21/02

(54) **VERFAHREN ZUR HERSTELLUNG EINES DOSIERVENTILS, DOSIERVENTIL**
METHOD FOR PRODUCING A METERING VALVE, AND METERING VALVE
PROCÉDÉ DE FABRICATION D'UNE SOUPAPE DE DOSAGE, SOUPAPE DE DOSAGE

(30) Priorität: 03.08.2017 DE 102017213454
(43) Veröffentlichungstag der Anmeldung: 10.06.2020
(73) Patentinhaber: Robert Bosch GmbH, 70442 Stuttgart (DE)
(72) Erfinder: HAINBERGER, Martin, 4020 Linz (AT); SCHMITZBERGER, Markus, 4073 Wilhering (AT); RAMMERSTORFER, Helmut, 4102 Goldwörth (AT)
(86) Internationale Anmeldenummer: PCT/EP2018/070704
(87) Internationale Veröffentlichungsnummer: WO 2019/025429

(56) Entgegenhaltungen:
- EP-A2- 2 383 457
- WO-A1-2018/028917
- DE-A1-102014 226 421
- DE-A1-102015 225 177
- DE-A1-102015 226 491

## Beschreibung

Die Erfindung betrifft ein Verfahren zur Herstellung eines Dosierventils für ein Fluid, insbesondere für einen flüssigen und/oder gasförmigen Brennstoff, mit den Merkmalen des Oberbegriffs des Anspruchs 1. Darüber hinaus betrifft die Erfindung ein Dosierventil für ein Fluid, insbesondere für einen flüssigen und/oder gasförmigen Brennstoff, mit den Merkmalen des Oberbegriffs des Anspruchs 5.

Bevorzugter Einsatzbereich des vorgeschlagenen Dosierventils ist die Brennstoffversorgung einer Verbrennungskraftmaschine, wobei es sich insbesondere um einen Gasmotor oder einen Gas-Diesel-Motor eines Fahrzeugs, beispielsweise eines Personenkraftfahrzeugs, eines Nutzfahrzeugs, eines Schienenfahrzeugs oder eines Schiffs handeln kann. Neben mobilen Anwendungen ist auch der Einsatz des Dosierventils in stationären Anlagen zur Energiegewinnung oder Energieerzeugung vorstellbar.

Bei dem Dosierventil kann es sich insbesondere um ein CV-Gasventil, ein "Large Engine Gas Valve" (LEGV), ein "Multiport Injection Valve" (MPI) oder ein "Ported Fuel Injection" (PFI) Valve handeln.

### Stand der Technik

Aus der Offenlegungsschrift DE 10 2015 212 475 A1 geht beispielhaft ein Gasventil zum Eindosieren eines gasförmigen Brennstoffs in einen Ansaugtrakt einer Verbrennungskraftmaschine hervor, das ein gegenüber einem Ventilsitzelement hubbewegliches Dichtelement umfasst. Das Dichtelement bildet eine Dichtfläche aus, die zum Schließen mindestens einer im Ventilsitzelement ausgebildeten Durchströmöffnung in Überdeckung mit dieser bringbar ist. Um ein besonders kompaktbauendes und kostengünstig herstellbares Gasventil zu schaffen, wird in dieser Druckschrift vorgeschlagen, dass das Dichtelement scheibenförmig ausgeführt ist und mindestens eine kreis- oder kreisbogenförmige Ausnehmung aufweist, die einen Außenringabschnitt und einen Innenringabschnitt definiert. Der Außenringabschnitt und der Innenringabschnitt sind dabei über mindestens einen Steg verbunden, der als Federarm ausgeführt ist und eine Verformung des Dichtelements zulässt. Das Dichtelement kann auf diese Weise über den Außenringabschnitt eingespannt werden, um das Dichtelement gegen das Ventilsitzelement axial vorzuspannen. Zum Öffnen des Gasventils wird lediglich der Innenringabschnitt angehoben, wobei sich das Dichtelement elastisch verformt. Die elastische Verformung bewirkt, dass das Dichtelement selbsttätig schließt, wenn die Kraft, vorliegend eine Magnetkraft, zum Anheben des Innenringabschnitts wegfällt. Das heißt, dass eine Schließfeder zum Schließen des Gasventils entbehrlich ist, wodurch der Aufbau des Ventils vereinfacht und Bauraum eingespart wird. Dokument EP 2 383 457 A offenbart auch ein trockenlaufendes Gasventil.

An Dosierventile werden in der Regel hohe Anforderungen hinsichtlich der Dosiergenauigkeit gestellt. Dies gilt insbesondere dann, wenn das Dosierventil der Brennstoffversorgung einer Verbrennungskraftmaschine dient, da die Dosiergenauigkeit Auswirkungen auf den Brennstoffverbrauch und die Schadstoffemissionen hat.

Zur Erzielung einer hohen Dosiergenauigkeit muss sichergestellt sein, dass beim Öffnen des Dosierventils ein definierter Öffnungsquerschnitt freigegeben wird. Da sich bei einem gattungsgemäßen Dosierventil der Öffnungsquerschnitt aus der Länge einer am Dichtelement ausgebildeten Dichtkante mal dem Hub ergibt, ist insbesondere eine genaue Hubeinstellung gefordert.

Der vorliegenden Erfindung liegt die Aufgabe zugrunde, ein Verfahren zur Herstellung eines Dosierventils anzugeben, das eine hohe Dosiergenauigkeit besitzt, um die Einhaltung einer maximal zulässigen Massenstromstreuung zu gewährleisten. Insbesondere soll das Verfahren eine genaue Hubeinstellung ermöglichen.

Zur Lösung der Aufgabe werden das Verfahren zur Herstellung eines Dosierventils mit den Merkmalen des Anspruchs 1 sowie das Dosierventil mit den Merkmalen des Anspruchs 5 vorgeschlagen. Vorteilhafte Weiterbildungen der Erfindung sind den jeweiligen Unteransprüchen zu entnehmen.

### Offenbarung der Erfindung

Das vorgeschlagene Verfahren dient der Herstellung eines Dosierventils für ein Fluid, insbesondere für einen flüssigen und/oder gasförmigen Brennstoff, wobei das Dosierventil ein vorzugsweise plattenförmiges Ventilsitzelement mit mindestens einer Durchströmöffnung für den flüssigen und/oder gasförmigen Brennstoff, einen dichtend mit dem Ventilsitzelement zusammenwirkenden, hubbeweglichen Ventilteller zum Freigeben und Verschließen der mindestens einen Durchströmöffnung sowie ein Hubanschlagelement mit einer ringförmigen Hubanschlagfläche zur Begrenzung des Hubs des Ventiltellers umfasst. Bei der Herstellung, insbesondere bei der Montage, des Dosierventils wird das Hubanschlagelement in Richtung eines den Ventilteller umgebenden Hubeinstellrings axial vorgespannt. Über den Hubeinstellring wird auf diese Weise der Hub des Ventiltellers voreingestellt. Zur Feineinstellung des Hubs des Ventiltellers wird die axiale Vorspannkraft verändert, wobei sich das Hubanschlagelement verformt.

Die Feineinstellung des Hubs trägt dazu bei, dass der beim Öffnen des Dosierventils freigegebene Öffnungsquerschnitt genau definiert ist. Ein nach dem angegebenen Verfahren hergestelltes Dosierventil weist demnach eine hohe Dosiergenauigkeit auf. Das Dosierventil ist somit insbesondere für Anwendungen geeignet, die eine hohe Dosiergenauigkeit erfordern.

Bei dem erfindungsgemäßen Verfahren kann die Feineinstellung des Hubs während und/oder nach der Montage des Dosierventils vorgenommen werden, wobei der Nachbearbeitungsaufwand vergleichsweise gering ist. Denn es muss lediglich die auf das Hubanschlagelement wirkende axiale Vorspannkraft verändert werden. Ein aufwendiger Teiletausch, der mit einer Demontage, einer erneuten Montage sowie der wiedeholten Prüfung aller Funktionswerte des Dosierventils einhergeht, ist in der Regel nicht erforderlich. Das vorgeschlagene Verfahren führt somit zu einer Verkürzung der Montage- bzw. Nachbearbeitungszeit und in der Folge zu einer Kostenersparnis.

Die zur Feineinstellung des Hubs erforderliche Verformung des Hubanschlagelements bewegt sich vorzugsweise im Mikrometerbereich. Das heißt, dass der auf diese Weise bewirkten Feineinstellung des Hubs gewisse Grenzen gesetzt sind. Sollten diese bereits ausgeschöpft sein, kann ggf. ein Teiletausch zur Einhaltung der maximal zulässigen Massenstromstreuung erforderlich sein. In diesem Fall kann das Hubanschlagelement ausgetauscht werden. Beispielsweise kann ein Hubanschlagelement eingesetzt werden, das eine geringere Steifigkeit besitzt und somit stärker verformbar ist. Alternativ oder ergänzend kann bzw. können der Ventilteller und/oder der Hubeinstellring ausgetauscht werden.

Die Verformung des Hubanschlagelements hat zur Folge, dass sich der Abstand des Hubanschlagelements bzw. der am Hubanschlagelement ausgebildeten ringförmigen Hubanschlagfläche in Bezug auf das Ventilsitzelement verringert. Dies wiederum führt zu einer Einschränkung des Bewegungsraums des Ventiltellers, so dass der über den Hubeinstellring voreingestellte Hub verkleinert wird. Die hierüber bewirkte Feineinstellung des Hubs reicht in der Regel aus, um Fertigungs- und/oder Montagetoleranzen auszugleichen. Ferner kann die Fertigung des Hubeinstellrings und/oder des Ventiltellers vereinfacht werden, da diese Teile nicht mehr hoch genau gefertigt werden müssen.

Bei dem erfindungsgemäßen Verfahren wird vorzugsweise das Hubanschlagelement mittels der Federkraft einer Feder in Richtung des Hubeinstellrings axial vorgespannt. Um die Feineinstellung des Hubs des Ventiltellers vorzunehmen, muss demnach nur die Vorspannung der Feder verändert werden. Alternativ kann die Feder ausgetauscht werden. Bei der Feder kann es sich beispielsweise um eine Teller- oder eine Schraubendruckfeder handeln. Bei der Wahl einer geeigneten Feder ist die Federkraft der Feder auf die Steifigkeit des Hubanschlagelements abzustimmen.

Alternativ oder ergänzend kann die axiale Vorspannkraft auch über einen Körper bewirkt werden, dessen axiale Lage in Bezug auf das Hubanschlagelement veränderbar ist. Der Körper kann hierzu in ein Gehäuseteil des Dosierventils eingeschraubt sein, so dass über die Einschraubtiefe die axiale Vorspannkraft variierbar ist.

Die axiale Vorspannkraft kann unmittelbar oder mittelbar in das Hubanschlagelement eingeleitet werden. Die mittelbare Krafteinleitung, beispielsweise über ein Kraftübertragungselement, besitzt den Vorteil, dass eine besonders gleichmäßige Kraftübertragung erzielbar ist.

Bevorzugt wird die axiale Vorspannkraft in einem Bereich des Hubanschlagelements eingeleitet, der radial innen in Bezug auf eine ringförmige Abstützfläche des Hubanschlagelements zur Abstützung am Hubeinstellring angeordnet ist. Je größer der radiale Abstand zwischen dem Bereich der axialen Abstützung und dem Bereich der Krafteinleitung ist, desto stärker verformt sich das Hubanschlagelement (Wirkprinzip "Biegebalken"). Vorzugsweise erfolgt die Krafteinleitung über einen ringförmigen Bereich, der konzentrisch zur ringförmigen Abstützfläche des Hubanschlagelements angeordnet ist, so dass eine gleichmäßige Verformung erzielt wird.

Zur Lösung der eingangs genannten Aufgabe wird ferner ein Dosierventil für ein Fluid, insbesondere für einen flüssigen und/oder gasförmigen Brennstoff, vorgeschlagen, das ein vorzugsweise plattenförmiges Ventilsitzelement mit mindestens einer Durchströmöffnung für den flüssigen und/oder gasförmigen Brennstoff, einen dichtend mit dem Ventilsitzelement zusammenwirkenden, hubbeweglichen Ventilteller zum Freigeben und Verschließen der mindestens einen Durchströmöffnung sowie ein Hubanschlagelement mit einer ringförmigen Hubanschlagfläche zur Begrenzung des Hubs des Ventiltellers umfasst. Erfindungsgemäß ist das Hubanschlagelement in Richtung eines den Ventilteller umgebenden Hubeinstellrings axial vorgespannt, wobei die axiale Vorspannkraft veränderbar ist, so dass über eine Verformung des Hubanschlagelements eine Feineinstellung des Hubs des Ventiltellers bewirkbar ist.

Bei dem vorgeschlagenen Dosierventil kann es sich demnach insbesondere um ein Ventil handeln, das nach dem zuvor beschriebenen erfindungsgemäßen Verfahren hergestellt worden ist.

Da das Hubanschlagelement eines erfindungsgemäßen Dosierventils axial vorgespannt ist, kann durch eine Verstärkung oder Reduzierung der axialen Vorspannkraft die Verformung des Hubanschlagelements derart beeinflusst werden, dass sich der Hub des Ventiltellers verkleinert oder vergrößert. Eine Vergrößerung des Hubs setzt voraus, dass das Hubanschlagelement durch die auf ihm lastende axiale Vorspannkraft bereits verformt wird. Andernfalls kann nur eine Verkleinerung des Hubs bewirkt werden.

Die Konstruktion des erfindungsgemäßen Dosierventils erlaubt somit eine Feineinstellung des Hubs des Ventiltellers, so dass beim Öffnen des Ventils sichergestellt ist, dass ein definierter Öffnungsquerschnitt freigegeben wird. Das Dosierventil zeichnet sich demnach durch eine hohe Dosiergenauigkeit aus.

Gemäß einer bevorzugten Ausführungsform der Erfindung ist das Hubanschlagelement mittels der Federkraft einer Feder in Richtung des Hubeinstellrings axial vorgespannt. Die Feineinstellung des Hubs des Ventiltellers kann somit in einfacher Weise durch eine Veränderung der Federvorspannung vorgenommen werden. Die Feder kann beispielsweise als Teller- oder Schraubendruckfeder ausgeführt sein.

Die Feder kann unmittelbar oder mittelbar am Hubanschlagelement axial abgestützt sein. Die mittelbare Abstützung, beispielsweise über einen Elektromagneten, der zur Betätigung des Dosierventils zwischen der Feder und dem Hubanschlagelement angeordnet ist, besitzt den Vorteil, dass die Federkraft gleichmäßig übertragen wird. Ferner kann die zur Lagefixierung des Elektromagneten in der Regel bereits vorhandene Feder zur axialen Vorspannung des Hubanschlagelements genutzt werden, so dass eine weitere Feder entfallen kann. Auf diese Weise kann Bauraum eingespart werden.

Des Weiteren wird vorgeschlagen, dass das Hubanschlagelement eine ringförmige Abstützfläche zur axialen Abstützung am Hubeinstellring sowie einen Bereich zur Einleitung der axialen Vorspannkraft aufweist, der in Bezug auf die ringförmige Abstützfläche radial innen liegend angeordnet ist. Das heißt, dass zwischen dem Bereich der Krafteinleitung und der axialen Abstützung des Hubanschlagelements ein radialer Abstand eingehalten wird, der nach dem Wirkprinzip "Biegebalken" zu der gewünschten Verformung des Hubanschlagelements führt. Vorzugsweise ist der radiale Abstand umlaufend gleich, so dass eine gleichmäßige Verformung des Hubanschlagelements erreicht wird.

Vorteilhafterweise ist das Hubanschlagelement scheiben- oder ringförmig ausgeführt. Das heißt, dass das Hubanschlagelement eine flache Bauform besitzt. Die flache Bauform begünstigt eine Verformung des Hubanschlagelements.

Ferner bevorzugt weist das Hubanschlagelement eine zentrale Ausnehmung auf. Die zentrale Ausnehmung führt zwangsläufig zu einer Ringform des Hubanschlagelements. Vorzugsweise grenzt an die zentrale Ausnehmung die ringförmige Hubanschlagfläche an, die somit radial innen liegend angeordnet ist. Die axiale Abstützung des Hubanschlagelements am Hubeinstellring erfolgt vorzugsweise über eine ringförmige Abstützfläche, die radial außen liegend angeordnet ist. Auf diese Weise wird das Wirkprinzip "Biegebalken" optimal umgesetzt.

Die zentrale Ausnehmung des Hubanschlagelements ermöglicht zudem die Verbindung des Ventiltellers mit einem Anker. Auf den Anker kann mittels eines Elektromagneten eingewirkt werden, so dass der Hub des Ventiltellers mittels Magnetkraft bewirkbar ist.

Des Weiteren wird vorgeschlagen, dass der Ventilteller in Richtung des Ventilsitzelements durch die Federkraft mindestens einer Feder axial vorgespannt ist. Die Feder kann beispielsweise als Schraubendruckfeder ausgeführt sein, die zwischen dem Ventilteller und dem Hubanschlagelement angeordnet ist. Über die mindestens eine Feder wird das Dosierventil bei unbestromtem Elektromagneten geschlossen gehalten. Ferner kann mittels der Feder die Rückstellung des Ventiltellers bewirkt werden.

Das erfindungsgemäße Verfahren sowie eine bevorzugte Ausführungsform eines erfindungsgemäßen Dosierventils werden nachfolgend anhand der beigefügten Zeichnungen näher erläutert. Diese zeigen:
Fig. 1 einen schematischen Längsschnitt durch ein erfindungsgemäßes Dosierventil und
Fig. 2 einen stark vereinfachten Längsschnitt durch das Dosierventil der Fig. 1 mit verformtem Hubanschlagelement zur Feineinstellung des Hubs des Ventiltellers.

### Ausführliche Beschreibung der Zeichnungen

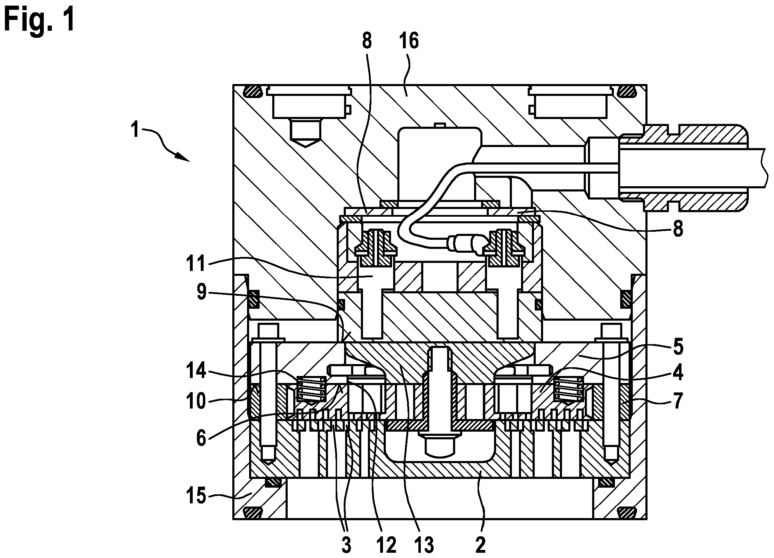

Fig. 1 zeigt ein Dosierventil 1 zum Eindosieren eines gasförmigen Brennstoffs in einen Ansaugtrakt einer Verbrennungskraftmaschine. Das dargestellte Dosierventil 1 ist nach einem erfindungsgemäßen Verfahren hergestellt worden ist, das eine Feineinstellung des Hubs des Dosierventils 1 und damit eine genaue Einstellung der effektiv freigegebenen Fläche beim Öffnen des Dosierventils ermöglicht.

Das dargestellte Dosierventil 1 umfasst ein hohlzylinderförmiges erstes Gehäuseteil 15, in das ein plattenförmiges Ventilsitzelement 2 mit mehreren konzentrisch angeordneten kreisbogenförmigen Durchströmöffnungen 3 angeordnet ist. Zum Freigeben und Verschließen der Durchströmöffnungen 3 ist ein hubbeweglicher Ventilteller 4 vorgesehen, der oberhalb des Ventilsitzelements 2 angeordnet ist. Der Ventilteller 4 ist mit einem Anker 13 verbunden, so dass der Hub des Ventiltellers 4 mittels eines Elektromagneten 11 bewirkbar ist, der in einem weiteren Gehäuseteil 16 aufgenommen ist, das mit dem ersten Gehäuseteil 15 verbunden ist.

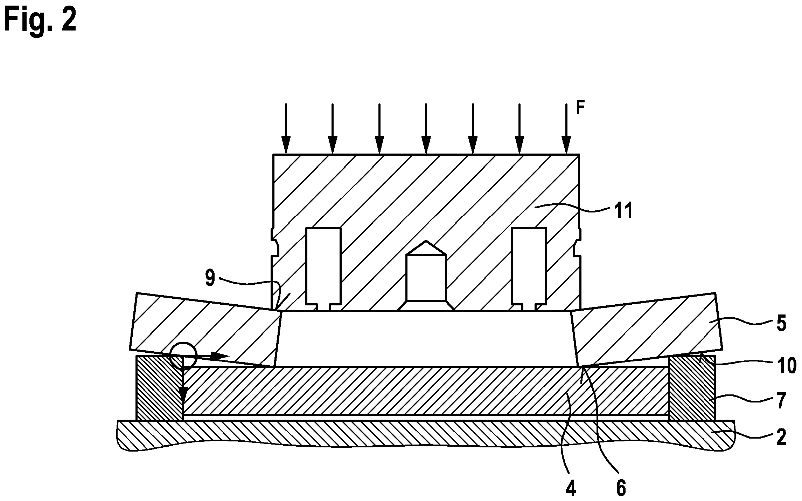

Zur Begrenzung des Hubs des Ventiltellers 4 ist ein ringförmiges Hubanschlagelement 5 mit einer ringförmigen Hubanschlagfläche 6 vorgesehen, die dem Ventilteller 4 zugewandt ist. Die beiden Endlagen des Ventiltellers 4 werden demnach einerseits durch das Ventilsitzelement 2, andererseits durch das Hubanschlagelement 5 bestimmt, wobei der Abstand zwischen dem Ventilsitzelement 2 und dem Hubanschlagelement 5 dem Hub des Ventiltellers 4 entspricht. Der Abstand wird vorliegend durch einen Hubeinstellring 7 vorgegeben, gegen den das Hubanschlagelement 5 mittels der Federkraft einer Feder 8 axial vorgespannt ist. Die Feder 8, die als Tellerfeder ausgeführt ist, ist hierzu am Elektromagneten 11 abgestützt, so dass die axiale Vorspannkraft mittelbar über den Elektromagneten 11 in das Hubanschlagelement 5 eingeleitet wird. Die Krafteinleitung erfolgt in einem ringförmigen Bereich 9, der eine zentrale Ausnehmung 12 des Hubanschlagelements 5 begrenzt, in welcher der Anker 13 aufgenommen ist. Die axiale Vorspannkraft führt zu einer Verformung des Hubanschlagelements 5, welche in der Fig. 2 stark vereinfacht bzw. überzeichnet dargestellt ist. Mit der Verformung rückt die ringförmige Hubanschlagfläche 6 näher an das Ventilsitzelement 2, so dass der den Hub definierende Abstand zwischen dem Hubanschlagfläche 6 und dem Ventilsitzelement 2 verringert wird. Durch Veränderung der axialen Vorspannung des Hubanschlagelements 5 kann demnach eine Feineinstellung des Hubs des Ventiltellers 4 vorgenommen werden. Die axiale Vorspannkraft entspricht der Federkraft der Feder 8 bzw. der Vorspannkraft der Feder 8, die in der Fig. 2 mit "F" bezeichnet ist und über den Elektromagneten 11 auf das Hubanschlagelement 5 wirkt.

Wird der Elektromagnet 11 bestromt, baut sich ein Magnetfeld auf, dessen Magnetkraft den Anker 13 einschließlich des Ventiltellers 4 in Richtung des Elektromagneten 11 zieht, bis der Ventilteller 4 an die ringförmige Hubanschlagfläche 6 des Hubanschlagelements 5 anschlägt. In dieser Lage gibt der Ventilteller 4 einen definierten Öffnungsquerschnitt frei. Wird die Bestromung des Elektromagneten 11 beendet, stellen die Gasdruckkräfte sowie Federn 14 in Form von Schraubendruckfedern, die zwischen dem Hubanschlagelement 5 und dem Ventilteller 4 angeordnet sind, den Ventilteller 4 und den Anker 13 in ihre Ausgangslage zurück.

## Patentansprüche

1. Verfahren zur Herstellung eines Dosierventils (1) für ein Fluid, insbesondere für einen flüssigen und/oder gasförmigen Brennstoff, umfassend ein vorzugsweise plattenförmiges Ventilsitzelement (2) mit mindestens einer Durchströmöffnung (3) für den flüssigen und/oder gasförmigen Brennstoff, einen dichtend mit dem Ventilsitzelement (2) zusammenwirkenden, hubbeweglichen Ventilteller (4) zum Freigeben und Verschließen der mindestens einen Durchströmöffnung (3) sowie ein Hubanschlagelement (5) mit einer ringförmigen Hubanschlagfläche (6) zur Begrenzung des Hubs des Ventiltellers (4),
**dadurch gekennzeichnet, dass** das Hubanschlagelement (5) in Richtung eines den Ventilteller (4) umgebenden Hubeinstellrings (7) axial vorgespannt wird und zur Feineinstellung des Hubs des Ventiltellers (4) die axiale Vorspannkraft verändert wird, wobei sich das Hubanschlagelement (5) verformt.

2. Verfahren nach Anspruch 1,
**dadurch gekennzeichnet, dass** das Hubanschlagelement (5) mittels der Federkraft einer Feder (8), vorzugsweise einer Teller- oder einer Schraubendruckfeder, in Richtung des Hubeinstellrings (7) axial vorgespannt wird.

3. Verfahren nach Anspruch 1 oder 2,
**dadurch gekennzeichnet, dass** die axiale Vorspannkraft unmittelbar oder mittelbar in das Hubanschlagelement (5) eingeleitet wird.

4. Verfahren nach einem der vorhergehenden Ansprüche,
**dadurch gekennzeichnet, dass** die axiale Vorspannkraft in einem Bereich (9) des Hubanschlagelements (5) eingeleitet wird, der radial innen in Bezug auf eine ringförmige Abstützfläche (10) des Hubanschlagelements (5) zur Abstützung am Hubeinstellring (7) angeordnet ist.

5. Dosierventil (1) für ein Fluid, insbesondere für einen flüssigen und/oder gasförmigen Brennstoff, umfassend ein vorzugsweise plattenförmiges Ventilsitzelement (2) mit mindestens einer Durchströmöffnung (3) für den flüssigen und/oder gasförmigen Brennstoff, einen dichtend mit dem Ventilsitzelement (2) zusammenwirkenden, hubbeweglichen Ventilteller (4) zum Freigeben und Verschließen der mindestens einen Durchströmöffnung (3) sowie ein Hubanschlagelement (5) mit einer ringförmigen Hubanschlagfläche (6) zur Begrenzung des Hubs des Ventiltellers (4),
**dadurch gekennzeichnet, dass** das Hubanschlagelement (5) in Richtung eines den Ventilteller (4) umgebenden Hubeinstellrings (7) axial vorgespannt ist und die axiale Vorspannkraft veränderbar ist, so dass über eine Verformung des Hubanschlagelements (5) eine Feineinstellung des Hubs des Ventiltellers (4) bewirkbar ist.

6. Dosierventil (1) nach Anspruch 5,
**dadurch gekennzeichnet, dass** das Hubanschlagelement (5) mittels der Federkraft einer Feder (8), vorzugsweise einer Teller- oder Schraubendruckfeder, in Richtung des Hubeinstellrings (7) axial vorgespannt ist.

7. Dosierventil (1) nach Anspruch 6,
**dadurch gekennzeichnet, dass** die Feder (8) unmittelbar oder mittelbar, vorzugsweise über einen Elektromagneten (11) zur Betätigung des Dosierventils (1), am Hubanschlagelement (5) axial abgestützt ist.

8. Dosierventil (1) nach einem der Ansprüche 5 bis 7,
**dadurch gekennzeichnet, dass** das Hubanschlagelement (5) eine ringförmige Abstützfläche (10) zur axialen Abstützung am Hubeinstellring (7) sowie einen Bereich (9) zur Einleitung der axialen Vorspannkraft aufweist, wobei der Bereich (9) in Bezug auf die ringförmige Abstützfläche (10) radial innen liegend angeordnet ist.

9. Dosierventil (1) nach einem der Ansprüche 5 bis 8,
**dadurch gekennzeichnet, dass** das Hubanschlagelement (5) scheiben- oder ringförmig ausgeführt ist und/oder eine zentrale Ausnehmung (12) aufweist.

10. Dosierventil (1) nach einem der Ansprüche 5 bis 9,
**dadurch gekennzeichnet, dass** der Ventilteller (4) in Richtung des Ventilsitzelements (2) durch die Federkraft mindestens einer Feder (14), vorzugsweise einer Schraubendruckfeder, axial vorgespannt ist.

## Claims

1. Method for producing a metering valve (1) for a fluid, in particular for a liquid and/or gaseous fuel, comprising a preferably plate-shaped valve seat element (2) with at least one throughflow opening (3) for the liquid and/or gaseous fuel, a valve head (4) which can be moved with a reciprocating movement and interacts in a sealing manner with the valve seat element (2) for releasing and closing the at least one throughflow opening (3), and a stroke stop element (5) with an annular stroke stop face (6) for limiting the stroke of the valve head (4),
**characterized in that** the stroke stop element (5) is prestressed axially in the direction of a stroke setting ring (7) which surrounds the valve head (4), and the axial prestressing force is changed for the precision setting of the stroke of the valve head (4), the stroke stop element (5) being deformed.

2. Method according to Claim 1,
**characterized in that** the stroke stop element (5) is prestressed axially in the direction of the stroke setting ring (7) by means of the spring force of a spring (8), preferably a cup spring or a compression coil spring.

3. Method according to Claim 1 or 2,
**characterized in that** the axial prestressing force is introduced directly or indirectly into the stroke stop element (5).

4. Method according to one of the preceding claims, **characterized in that** the axial prestressing force is introduced in a region (9) of the stroke stop element (5), which region (9) is arranged radially on the inside in relation to an annular supporting face (10) of the stroke stop element (5) for support on the stroke setting ring (7) .

5. Metering valve (1) for a fluid, in particular for a liquid and/or gaseous fuel, comprising a preferably plate-shaped valve seat element (2) with at least one throughflow opening (3) for the liquid and/or gaseous fuel, a valve head (4) which can be moved with a reciprocating movement and interacts in a sealing manner with the valve seat element (2) for releasing and closing the at least one throughflow opening (3), and a stroke stop element (5) with an annular stroke stop face (6) for limiting the stroke of the valve head (4),
**characterized in that** the stroke stop element (5) is prestressed axially in the direction of a stroke setting ring (7) which surrounds the valve head (4), and the axial prestressing force can be changed, with the result that a precision setting of the stroke of the valve head (4) can be brought about via a deformation of the stroke stop element (5).

6. Metering valve (1) according to Claim 5, **characterized in that** the stroke stop element (5) is prestressed axially in the direction of the stroke setting ring (7) by means of the spring force of a spring (8), preferably a cup spring or a compression coil spring.

7. Metering valve (1) according to Claim 6, **characterized in that** the spring (8) is supported axially on the stroke stop element (5) directly or indirectly, preferably via an electromagnet (11) for actuating the metering valve (1).

8. Metering valve (1) according to one of Claims 5 to 7, **characterized in that** the stroke stop element (5) has an annular supporting face (10) for axial support on the stroke setting ring (7), and a region (9) for introducing the axial prestressing force, the region (9) being arranged so as to lie radially on the inside in relation to the annular supporting face (10).

9. Metering valve (1) according to one of Claims 5 to 8, **characterized in that** the stroke stop element (5) is of disk-shaped or annular configuration and/or has a central recess (12).

10. Metering valve (1) according to one of Claims 5 to 9, **characterized in that** the valve head (4) is prestressed axially in the direction of the valve seat element (2) by way of the spring force of at least one spring (14), preferably a compression coil spring.

## Revendications

1. Procédé de fabrication d'une soupape de dosage (1) pour un fluide, en particulier pour un carburant liquide et/ou gazeux, comportant un élément siège de soupape (2) de préférence en forme de plaque et doté d'au moins une ouverture d'écoulement (3) pour le carburant liquide et/ou gazeux, une tête de soupape (4) pouvant être animée d'un mouvement de va-et-vient et coopérant de manière étanche avec l'élément siège de soupape (2) pour la libération et la fermeture de l'au moins une ouverture d'écoulement (3) ainsi qu'un élément de butée de course (5) doté d'une surface de butée de course (6) annulaire pour la limitation de la course de la tête de soupape (4),
**caractérisé en ce que** l'élément de butée de course (5) est précontraint axialement en direction d'une bague de réglage de course (7) entourant la tête de soupape (4) et la force de précontrainte axiale est modifiée pour le réglage précis de la course de la tête de soupape (4), l'élément de butée de course (5) se déformant.

2. Procédé selon la revendication 1,
**caractérisé en ce que** l'élément de butée de course (5) est précontraint axialement en direction de la bague de réglage de course (7) grâce à la force d'un ressort (8), de préférence d'une rondelle-ressort ou d'un ressort de compression hélicoïdal.

3. Procédé selon la revendication 1 ou 2,
**caractérisé en ce que** la précontrainte axiale est introduite directement ou indirectement dans l'élément de butée de course (5).

4. Procédé selon l'une des revendications précédentes, **caractérisé en ce que** la force de précontrainte axiale est introduite dans une région (9) de l'élément de butée de course (5) qui est disposée radialement à l'intérieur par rapport à une surface de support (10) annulaire de l'élément de butée de course (5) servant au support sur la bague de réglage de course (7).

5. Soupape de dosage (1) pour un fluide, en particulier pour un carburant liquide et/ou gazeux, comportant un élément siège de soupape (2) de préférence en forme de plaque et doté d'au moins une ouverture d'écoulement (3) pour le carburant liquide et/ou gazeux, une tête de soupape (4) pouvant être animée d'un mouvement de va-et-vient et coopérant de manière étanche avec l'élément siège de soupape (2) pour la libération et la fermeture de l'au moins une ouverture d'écoulement (3) ainsi qu'un élément de butée de course (5) doté d'une surface de butée de course (6) annulaire pour la limitation de la course de la tête de soupape (4),
**caractérisé en ce que** l'élément de butée de course (5) est précontraint axialement en direction d'une bague de réglage de course (7) entourant la tête de soupape (4) et la force de précontrainte axiale peut être modifiée de sorte qu'un réglage précis de la course de la tête de soupape (4) puisse être produit par le biais d'une déformation de l'élément de butée de course (5).

6. Soupape de dosage (1) selon la revendication 5, **caractérisée en ce que** l'élément de butée de course (5) est précontraint axialement en direction de la bague de réglage de course (7) grâce à la force d'un ressort (8), de préférence d'une rondelle-ressort ou d'un ressort de compression hélicoïdal.

7. Soupape de dosage (1) selon la revendication 6, **caractérisée en ce que** le ressort (8) est supporté axialement sur l'élément de butée de course (5) directement ou indirectement, de préférence par le biais d'un électroaimant (11) servant à l'actionnement de la soupape de dosage (1).

8. Soupape de dosage (1) selon l'une des revendications 5 à 7,
**caractérisée en ce que** l'élément de butée de course (5) comprend une surface de support (10) annulaire servant au support axial sur la bague de réglage de course (7) ainsi qu'une région (9) servant à l'introduction de la force de précontrainte axiale, la région (9) étant disposée de manière à se situer radialement à l'intérieur par rapport à la surface de support (10) annulaire.

9. Soupape de dosage (1) selon l'une des revendications 5 à 8,
**caractérisée en ce que** l'élément de butée de course (5) est réalisé en forme de disque ou de manière annulaire et/ou comprend un évidement (12) central.

10. Soupape de dosage (1) selon l'une des revendications 5 à 9,
**caractérisée en ce que** la tête de soupape (4) est précontrainte axialement en direction de l'élément siège de soupape (2) grâce à la force d'au moins un ressort (14), de préférence d'un ressort de compression hélicoïdal.
